# EUROPEAN PATENT SPECIFICATION

(11) **EP 3 150 495 B1**
(45) Date of publication and mention of the grant of the patent: **08.05.2019**
(21) Application number: 15799554.9
(22) Date of filing: 20.05.2015
(51) Int. Cl.: B64G 1/24, B64G 1/00, B64G 1/28, B64G 1/36, B64G 1/64

(54) **CONTROL DEVICE FOR ROCKET**
STEUERUNGSVORRICHTUNG FÜR RAKETE
DISPOSITIF DE COMMANDE DE FUSÉE

(30) Priority: 28.05.2014 JP 2014110219
(43) Date of publication of application: 05.04.2017
(73) Proprietor: IHI Corporation, Tokyo 135-8710 (JP)
(72) Inventor: OTSUKA, Takenori, Tokyo 135-8710 (JP)
(74) Representative: MERH-IP Matias Erny Reichl Hoffmann Patentanwälte PartG mbB
(86) International application number: PCT/JP2015/064508
(87) International publication number: WO 2015/182456

(56) References cited:
- JP-A- H06 247 399
- JP-A- H06 247 399
- JP-A- H06 344 994
- JP-A- H06 344 994
- US-B1- 6 622 971
- Committee Space ET AL: "Streamlining Space Launch Range Safety", , 31 December 2000 (2000-12-31), pages 1-99, XP55111604, Internet ISBN: 978-0-30-906931-1 Retrieved from the Internet: URL:http://158.132.155.107/posh97/private/ aviation-safety/space-launch-range-safety. pdf [retrieved on 2014-04-02]

## Description

### TECHNICAL FIELD

The present disclosure relates to a control device for a rocket.

### BACKGROUND ART

For example, in a multi-staged rocket for use in launching a payload such as a satellite, an engine of an n-th-stage rocket is ignited following a cut-off of an (n-1)-th-stage rocket engine, and an (n-1)-th-stage rocket is separated and discarded from an n-th-stage rocket.

The (n-1)-th-stage rocket, which is separated and discarded, may be dropped to impact within a safe area apart from the land on the earth or from the sea near the land. Accordingly, in an event of launching the multi-staged rocket, engines of a second-stage rocket and after may be ignited at appropriate timing, that is, to separate and discard a preceding rocket body at appropriate timing.

As a technology related to this, there is a proposal for separating and discarding a discarded object from a flying object when a horizontal flying distance from a takeoff point of the flying object, which is calculated from an acceleration of the flying object, exceeds a distance of a known separation/discarding point from the takeoff point, the separation/discarding point being suitable for dropping the discarded object to impact within such a safe area (for example, Patent Document 1).
JP H06 247399 A shows an onboard computer provided in a spacecraft to automatically effect safe operation of the spacecraft.

### RELATED ART DOCUMENT

### PATENT DOCUMENTS

Patent Document 1: JP H06-344994 A

### SUMMARY

### PROBLEMS TO BE SOLVED

Incidentally, in consideration of weather condition difference and the like at a launching time, the fuel of a little more than a standard quantity by adding a margin thereto may be loaded on a rocket. Therefore, when the rocket is separated and discarded at such a predetermined point as in the conventional proposal, the rocket is sometimes separated and discarded in a state where fuel by the amount of margin remains therein.

The rocket may load the fuel, of which amount is appropriate in response to a consumption of the fuel by the rocket engine, in terms of enhancing a launch capability of the rocket by extending the flying distance with respect to a loaded amount of the fuel. In other words, it is ideal that the fuel loaded in the rocket be consumed as completely as possible. From a viewpoint, in terms of enhancing the launch capability of the rocket, the rocket may not be separated or discarded at such a predetermined point as in the conventional proposal.

Moreover, also in a single-staged rocket in which the n-th rocket is not separated and discarded, the rocket engine may be cut-off after the loaded fuel is consumed without waste and the rocket may be dropped to impact within a safe area in order to enhance the launch capability of the rocket.

The present disclosure has been made in consideration of the above-described circumstances. It is an object of the present disclosure to provide a control device for a rocket, which can drop a discarded object such as the discarded n-th rocket body and the single-staged rocket, of which engine is already cut-off, to the safe area while enhancing the launching capability by consuming the loaded fuel as much as possible.

### MEANS FOR SOLVING PROBLEM

In order to achieve the above-described object, a control device for a rocket according to the present disclosure, which is described in claim 1, is a control device for a rocket, cutting-off a rocket engine during flight of the rocket and discarding a discarded object, the control device being characterized by including: a flight path predicting processor that periodically predicts a flight path, wherein the flight path predicting processor is configured to predict a first cycle, which was predicted in the past time of the predicted flight paths, a second cycle, which is predicted in the present time of predicted flight paths, and a third cycle, which is predicted in the next time of the predicted flight paths, wherein the rocket therealong flies from now on by residual fuel, based on a flight speed, a flight position and flight attitude of the rocket; an impact point predicting processor that for periodically predicts impact points of the discarded object in a case of cutting-off the rocket engine at respective scheduled passing points on the predicted flight path of the rocket; and an engine cut-off controller that cuts-off the rocket engine and discards the discarded object in a case where the flight position of the rocket coincides with a scheduled passing point farthest from a launching spot of the rocket, the scheduled passing point also being where the discarded object discarded at a scheduled passing point is expected to impact within a safe area on predetermined topographic data, the scheduled passing point being among respective scheduled passing points on a predicted flight path predicted in the first cycle.

Moreover, in order to achieve the above-described object, a control device for a rocket according to the present disclosure, which is described in claim 2, is a control device for a rocket, cutting-off a rocket engine during flight of the rocket and discarding a discarded object, the control device being characterized by including: a flight path predicting processor that periodically predicts a flight path, wherein the flight path predicting processor is configured to predict a first cycle, which is predicted in the past time of the predicted flight paths, a second cycle, which is predicted in the present time of predicted flight paths, and a third cycle, which is predicted in the next time of the predicted flight paths, wherein the rocket flies therealong from now on by residual fuel, based on a flight speed, a flight position and flight attitude of the rocket; a impact point predicting processor that periodically predicts impact points of the discarded object in a case of cutting-off the rocket engine at respective scheduled passing points on the predicted flight path of the rocket; and an engine cut-off controller, in a case where it is estimated that none of predicted impact points of the discarded object, predicted for respective scheduled passing points on a predicted flight path predicted in the third cycle from a change of at least one of the predicted flight path of the rocket, predicted by adding variations obtained from the predicted impact point of the discarded object, which is predicted in the first cycle, to the predicted impact point of the discarded object, which is predicted in the second cycle, and thereby estimates the predicted impact point which is predicted in the third cycle, comes to be located within a safe area on predetermined topographic data, for cutting-off the rocket engine and discarding the discarded object at a farthest scheduled passing point from a launching spot of the rocket, the scheduled passing point being where a predicted impact point of the discarded object is located within the safe area on the topographic data, the scheduled passing point being among respective scheduled passing points on a predicted flight path predicted at a present time in the second cycle, and the predicted impact point being predicted to correspond to each of the scheduled passing points.

In accordance with the control device for a rocket according to the present disclosure, which is described in claim 1, the path (predicted flight path) the rocket is predicted to fly therealong by the residual fuel during the flight of the launched rocket is predicted. This predicted flight path is periodically predicted and updated to latest contents. Then, every time when the predicted flight path is predicted, the respective points (predicted impact points) on which the discarded object is predicted to impact in the case where the rocket engine is cut-off at a plurality of the respective scheduled passing points set on the predicted flight path are predicted. The predicted impact points are also periodically predicted and updated to latest contents.

Then, the rocket engine is cut-off and the discarded object is discarded when the flying rocket reaches the scheduled passing point farthest from the launching spot of the rocket, the scheduled passing point also being where the discarded object discarded at the scheduled passing point is predicted to impact within the safe area on the predetermined topographic data, the scheduled passing point being among the respective scheduled passing points on the predicted flight path of the rocket, which was predicted in the

Moreover, also in the control device for a rocket according to the present disclosure, which is described in claim 2, in a similar way to the control device for a rocket, which is described in claim 1, the predicted flight path of the rocket and the predicted impact points of the discarded object in the case where the rocket engine is cut-off at the plurality of respective scheduled passing points set on the predicted flight path are periodically predicted during the flight of the launched rocket, and are updated to the latest contents.

Then, if the discarded object does not impact within the safe area of the topographic data when the rocket engine is cut-off and the discarded object is discarded at the respective passing points on the predicted flight path, which are predicted in the next cycle, then the rocket engine is cut-off and the discarded object is discarded when the flying rocket reaches the scheduled passing point farthest from the launching spot of the rocket, the scheduled passing point also being where it is predicted that then engine is cut-off and the discarded object discarded at the scheduled passing point impacts within the safe area on the predetermined topographic data, the scheduled passing point being among the respective scheduled passing points on the latest predicted flight path of the rocket, which is predicted at the present time.

Here, as the discarded object of the rocket, for example, there are mentioned: a fairing separated and discarded in an event of putting a payload in a single-staged rocket or a multi-staged rocket; an (n-1)-th-stage rocket separated and discarded from an n-th-stage rocket in the multi-staged rocket; and further; the single-staged rocket itself.

Therefore, in accordance with the control device for a rocket according to the present disclosure, which is described in claim 1 or claim 2, for example, even if the fuel consumed by the rocket engine in order to fly the rocket along the determined flight path fluctuates due to a weather condition and the like, the rocket is flied to the farthest scheduled passing point at which the discarded object drops to impact within the safe area of the topographic data, and thereafter, the rocket engine is cut-off, and the discarded object is discarded.

Hence, while extending the flight distance of the rocket by consuming the loaded fuel as much as possible to thereby enhance the launch capability thereof, the discarded object can be dropped to impact within the safe area.

Moreover, the control device for a rocket according to the present disclosure, which is described in claim 3, is the control device for a rocket according to the present disclosure, which is described in either one of claims 1 and 2, characterized in that the rocket is a multi-staged rocket, the discarded object includes at least an (n-1)-th-stage rocket body separated and discarded from an n-th-stage rocket, the flight path predicting processor periodically predicts a predicted flight path, along which the multi-staged rocket flies from now on by propelling power generated by an (n-1)-th-stage rocket engine by using residual fuel, based on a flight speed, a flight position and flight attitude of the multi-staged rocket, and for respective scheduled passing points on the predicted flight path of the multi-staged rocket, the impact point predicting processor periodically predicts predicted impact points of the (n-1)-th-stage rocket in a case where the (n-1)-th-stage rocket engine is cut-off and the (n-1)-th-stage rocket body is separated and discarded from the n-th-stage rocket.

In accordance with the control device for a rocket according to the present disclosure, which is described in claim 3, in accordance with the control device for rocket according to the present disclosure, which is described in either one of claims 1 and 2, in a case where the rocket is a multi-staged rocket, the separation/discarding of the (n-1)-th-stage rocket in which the rocket engine is cut-off from the n-th-stage rocket is performed at the scheduled passing point, which is farthest from a launching spot of the multi-staged rocket, and at which the separated and discarded (n-1)-th-stage rocket body drops to impact within the safe area.

Therefore, the flight distance of the multi-staged rocket by the propelling power of the (n-1)-th-stage rocket engine can be extended by consuming the fuel of the (n-1)-th-stage rocket as much as possible, and the (n-1)-th-stage rocket body separated and discarded from the n-th-stage rocket can be dropped to impact within the safe area.

### EFFECT

In accordance with the present disclosure, the discarded object such as the discarded n-th rocket body and the single-staged rocket of which engine is already cut-off can be dropped to impact within the safe area while enhancing the launch capability by consuming the loaded fuel as much as possible.

### BRIEF DESCRIPTION OF DRAWINGS

FIG. 1 is a partially cutaway front view showing a schematic configuration of a second-stage rocket on which a control device according to a first embodiment of the present disclosure is mounted.
FIG. 2 is an explanatory view showing a nominal flight path of the two-staged rocket of FIG. 1 and a drop trajectory of a separated/discarded object from the rocket.
FIG. 3 is an explanatory view showing topographic data of down ranges (areas on range) including impact limit lines (ILLs) of countries, which are stored in an internal memory of a controller in FIG. 1.
FIG. 4 is a flowchart showing a procedure of processing performed by a mounted computer in FIG. 1.
FIG. 5 is a flowchart showing an example of a specific procedure of engine cut-off determination processing in FIG. 4.
FIG. 6 is a flowchart showing an example of a specific procedure of engine cut-off determination processing in FIG. 4, which is performed by a mounted computer of a two-staged rocket on which a control device according to a second embodiment of the present disclosure is mounted.
FIG. 7 is a partially cutaway front view showing a schematic configuration of a single-staged rocket on which control devices according to a third embodiment and fourth embodiment of the present disclosure are mounted.
FIG. 8 is an explanatory view showing a nominal flight path of the single-staged rocket in FIG. 7 and a drop trajectory of the rocket body.
FIG. 9 is a flowchart showing a procedure of processing performed by a mounted computer in FIG. 7.
FIG. 10 is a flowchart showing an example of a specific procedure of engine cut-off determination processing in FIG. 9, which is performed by the mounted computer of the single-staged rocket on which the control device according to the third embodiment of the present disclosure is mounted.
FIG. 11 is a flowchart showing an example of a specific procedure of engine cut-off determination processing in FIG. 9, which is performed by the mounted computer of the single-staged rocket on which the control device according to the fourth embodiment of the present disclosure is mounted.

### DETAILED DESCRIPTION OF EMBODIMENTS

A description is made below of embodiments of a control device for a rocket according to the present disclosure while referring to the drawings. In the following embodiments, a description is made of a two-staged rocket as an example of the rocket.

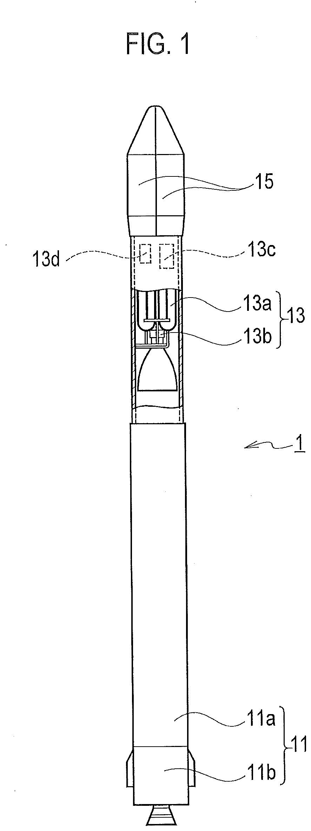

FIG. 1 is a partially cutaway front view showing a schematic configuration of a two-staged rocket on which the control device according to a first embodiment is mounted. A two-staged rocket 1 of this embodiment, which is shown in FIG. 1, includes first-stage and second-stage rockets 11 and 13 and a fairing 15.

The first-stage and second-stage rockets 11 and 13 include fuel tanks 11a and 13a of liquid oxygen and liquid hydrogen and rocket engines 11b and 13b which use the liquid oxygen and the liquid hydrogen as set of those propellants, respectively. Note that illustration of a solid rocket booster and an auxiliary engine, which are for use at a time of launching the two-staged rocket 1, is omitted.

The second-stage rocket 13 is connected to an upper portion of the first-stage rocket 11 through a separation mechanism (not shown). When the first-stage rocket engine 11b is cut-off by substantially finishing use of propellants (liquid oxygen and liquid hydrogen) of the fuel tank 11a, the first-stage rocket body 11 is separated from the second-stage rocket 13 by the separation mechanism, and the second-stage rocket engine 13b is ignited.

The fairing 15 covers a payload (not shown) connected to an upper portion of the second-stage rocket 13 through a separation mechanism, and opens to halves from a tip end thereof during flight of the two-staged rocket 1, and is separated and discarded from the two-staged rocket 13.

In some case, the fairing 15 is separated and discarded from the second-stage rocket 13 before the first-stage rocket body 11 is separated and discarded from the second-stage rocket 13. However, in this embodiment, a description is made of a case where the fairing 15 is separated and discarded from the second-stage rocket 13 after elapse of a certain time since the first-stage rocket body 11 is separated and discarded from the second-stage rocket 13 or after the first-stage rocket 11 is propelled by a certain distance since the first-stage rocket 11 is separated and discarded.

When the fairing 15 is separated and discarded from the second-stage rocket 13, the payload (not shown) in an inside of the fairing 15 is exposed. When the second-stage rocket engine 13b is cut-off by finishing use of propellants (liquid oxygen and liquid hydrogen) of the fuel tank 11a, the payload is separated from the second-stage rocket 13, and is placed into a satellite orbit.

The ignition and cut-off of the first-stage and second-stage rocket engines 11b and 13b and the separation of the first-stage rocket body 11 and the fairing 15 from the second-stage rocket 13 are controlled by a mounted computer (GCC: Guidance Control Computer) 13c (corresponding to a control device for a rocket in claims) in the second-stage rocket 13.

To the mounted computer 13c, an IMU (Inertial Measuring Unit) 13d is connected, which calculates a flight speed, flight position and flight attitude of the two-staged rocket 1 by using gyro and acceleration sensors. The mounted computer 13c controls propelling directions and the like of the rocket engines 11b and 13b based on the flight speed, the flight position and the flight attitude, which are sensed by the IMU 13d, so that the two-staged rocket 1 can fly through a nominal flight path of which data is stored in an internal memory of the mounted computer 13c.

Moreover, the mounted computer 13c monitors amounts of the fuel remaining in the fuel tanks 11a and 13a of the two-staged rocket 1, and predicts a flight path of the two-staged rocket 1 based on the monitored amounts of fuel and on the flight speed, flight position and flight attitude of the two-staged rocket 1, which are sensed by the IMU 13d.

The flight path predicted by the mounted computer 13c (that is, a predicted flight path) includes a path along which the two-staged rocket 1 flies from now on by propelling power of the first-stage rocket engine 11b by using residual fuel of the first-stage rocket 11 until combustion of the first-stage rocket engine 11b is cut-off. Hereinafter, this predicted flight path is referred to as a first-stage predicted flight path.

Moreover, the predicted flight path includes a path along which the two-staged rocket 1 flies by propelling power of the second-stage rocket engine 13b by using the fuel of the second-stage rocket 13 after the first-stage rocket 11 is separated and discarded from the second-stage rocket 13. Hereinafter, this predicted flight path is referred to as a second-stage predicted flight path.

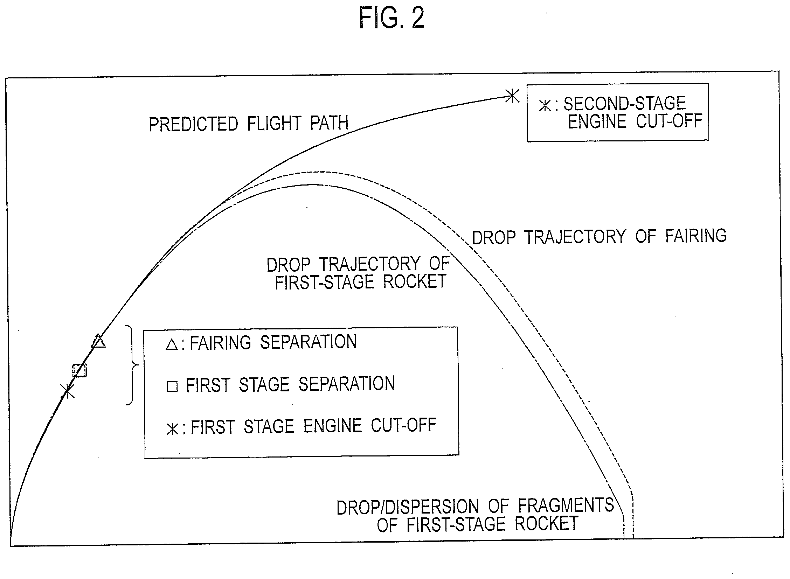

Note that a solid line in an explanatory view in FIG. 2 is the predicted flight path of the two-staged rocket 1, which is predicted by the mounted computer 13c. In this solid line, a segment from a launching point in which both of a ground surface distance and an altitude are "0" to a combustion cut-off point of the first-stage rocket engine 11b, which is indicated by a left plot point between two asterisk plot points present in FIG. 2, is the first-stage predicted flight path. Moreover, a segment from a separating/discarding point of the first-stage rocket engine 11b to a combustion cut-off point of the second-stage rocket engine 13b, which is indicated by a right plot point between the two asterisk plot points present in FIG. 2, is the second-stage predicted flight path.

Furthermore, the mounted computer 13c predicts a point where the first-stage rocket body 11 is predicted to impact, that is, a predicted impact point (IIP: Instantaneous Impact Point) in a case where the first-stage rocket engine 11b is cut-off at the cut-off point on the first-stage predicted flight path, and the first-stage rocket 11 is separated and discarded from the second-stage rocket 13 at the separating/discarding point placed forward thereof.

Moreover, the mounted computer 13c predicts respective points on which pieces of the fairing 15 are predicted to impact, that is, predicted impact points in a case where the two-staged rocket 1, which passes a certain time or is propelled by a certain distance since the first-stage rocket 11 is separated and discarded, opens the fairing 15 to halves and separates and discards the fairing 15 from the second-stage rocket 13 at a separating/discarding point indicated by a blank triangle plot point in FIG. 2 on the second-stage predicted flight path.

Note that the mounted computer 13c individually predicts the predicted impact points of the first-stage rocket 11 and the fairing 15 based on the flight speeds, flight positions and flight attitudes of the two-staged rocket 1 on the respective first-stage and second-stage predicted flight paths.

Moreover, the predicted impact point of the first-stage rocket body 11 is varied depending on to which point on the first-stage predicted flight path the cut-off point of the first-stage rocket engine 11b is to be decided. Accordingly, the mounted computer 13c sets a plurality of scheduled passing points on the first-stage predicted flight path, and individually predicts the predicted impact points of the first-stage rocket body 11 for cases where the respective scheduled passing points are decided to be the combustion cut-off point of the first-stage rocket engine 11b.

Furthermore, the second-stage predicted flight path of the two-staged rocket 1 is varied depending on where the cut-off point of the first-stage rocket engine 11b on the first-stage predicted flight path is to be decided. Accordingly, after deciding the cut-off point of the first-stage rocket engine 11b, the mounted computer 13c predicts the second-stage predicted flight path of the two-staged rocket 1, which corresponds to the decided cut-off point. Then, the mounted computer 13c predicts a predicted impact point of the fairing 15 while taking, as the separating/discarding point, a position of the two-staged rocket 1 on the second-stage predicted flight path when the two-staged rocket 1 flies for a certain time or by a certain distance from the separating/discarding point of the first-stage rocket 11.

As described above, the separating/discarding point of the fairing 15 on the second-stage predicted flight path is assumed so as to individually correspond to each of the scheduled passing points on the first-stage predicted flight path, which is assumed as the cut-off point of the first-stage rocket engine 11b. Hence, in the same way as the predicted impact point of the first-stage rocket 11, the mounted computer 13c predicts the predicted impact point, which corresponds to the separating/discarding point of the fairing 15, individually in response to the respective scheduled passing points on the first-stage predicted flight path assumed as the cut-off point of the first-stage rocket engine 11b.

Incidentally, the first-stage and second-stage predicted flight paths of the two-staged rocket 1, which are predicted by the mounted computer 13c, are so-called nominal flight paths. However, in an actual flight path of the two-staged rocket 1, dispersion with respect to the nominal flight paths occurs by an influence of a weather condition or the like. Then, this dispersion is not reflected on the first-stage and second-stage predicted flight paths of the two-staged rocket 1, which serve as bases in an event where the mounted computer 13c predicts the predicted impact points of the first-stage rocket body 11 and the fairing 15.

Accordingly, in consideration of the dispersion of the actual flight path of the two-staged rocket 1 with respect to the nominal flight path, the mounted computer 13c predicts the predicted impact points of the first-stage rocket body 11 and the fairing 15 as ranges including some dispersion.

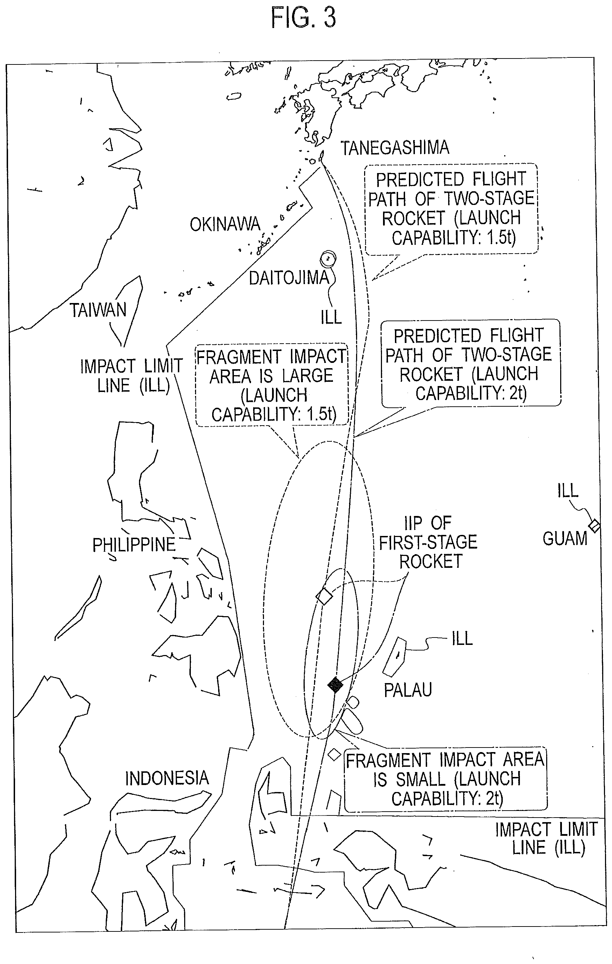

Note that, in the internal memory of the mounted computer 13c, topographic data that defines a safe area where the impact of the discarded object of the two-staged rocket 1 is allowed is stored together with data of the nominal flight path of the two-staged rocket 1. As shown in an explanatory view of FIG. 3, this topographic data is topographic data of down ranges (areas on a range) including impact limit lines (ILL) indicating boundary lines of lands to be protected from the impact of the discarded object and seas adjacent thereto. Hence, a residual area excluding areas on more land sides than the impact limit lines becomes a safe area SA where the impact of the discarded object of the two-staged rocket 1 is allowed.

Moreover, in the internal memory of the mounted computer 13c, data is stored, which indicates an area on which there drop fragments of the first-stage rocket body 11 and the fairing 15 separated and discarded from the second-stage rocket 13. A size and shape of such a fragment impact area differ depending on a launch capability of the two-staged rocket 1, that is, a launching enabled weight of the payload (not shown).

This is because, as the two-staged rocket 1 has a higher launch capability, inertia in a flying direction, which acts on the first-stage rocket body 11 at the separation/discarding time, is larger, and a dispersion degree of the fragments of the first-stage rocket body 11 after the separation/discarding, the dispersion being caused by force other than the inertia, is smaller.

For example, a fragment impact area of the first-stage rocket 11 in a two-staged rocket 1 with a launching capability of 1.5 t (ton), which flies on a predicted flight path shown by a dotted line in FIG. 3, becomes such a range as shown by a dotted oval. Moreover, a fragment drop area of the first-stage rocket 11 in a two-staged rocket 1 with a launch capability of 2 t (ton), which flies on a predicted flight path shown by an alternate long and short dash line in FIG. 3, becomes a smaller range than the fragment impact area of the first-stage rocket 11 in the two-staged rocket 1 with a launch capability of 1.5 t (ton).

Note that a blank rhombus in FIG. 3, which is plotted on the predicted flight path of the two-staged rocket 1 with a launching capability of 1.5 t (ton), is a predicted impact point (IIP) of the first-stage rocket 11 in the two-staged rocket 1 with a launch capability of 1.5 t (ton). Moreover, a solid rhombus in FIG. 3, which is plotted on the predicted flight path of the two-staged rocket 1 with a launch capability of 2 t (ton), is an impact point (IIP) of the first-stage rocket 11 in the two-staged rocket 1 with a launch capability of 2 t (ton).

By an amount that the inertia in the flying direction, which acts on the first-stage rocket 11 at the separation/discarding time, is larger in the two-staged rocket 1 with a launching capability of 2 t (ton) than in the two-staged rocket 1 with a launching capability of 1.5 t (ton), the predicted impact point of the first-stage rocket 11 in the two-staged rocket 1 with a launching capability of 2 t (ton) is placed closer to the front in the flying direction of the two-staged rocket 1 with respect to the fragment drop area.

Then, the mounted computer 13c collates the predicted impact points of the first-stage rocket 11 and the fairing 15 (which include the fragment drop area) with the topographic data, and extracts a set in which both of the predicted impact point of the first-stage rocket 11 and the predicted impact point of the fairing 15 are located within the safe area SA. Moreover, the mounted computer 13c defines a scheduled passing point, which corresponds to the extracted set and is assumed to be the separating/discarding point of the first-stage rocket 11 on the first-stage predicted flight path, as an official separating/discarding point of the first-stage rocket 11.

At this time, in a case where there are plural sets of combinations in each of which both of the predicted impact point of the first-stage rocket body 11 and the predicted impact point of the fairing 15, each including the fragment impact area, are located within the safe area SA, the mounted computer 13c defines a scheduled passing point, which is farthest from a launching spot of the two-staged rocket 1 among a plurality of scheduled passing points corresponding to the combinations, as the cut-off point of the first-stage rocket engine 11b.

In such a way, until the combustion of the first-stage rocket engine 11b is cut-off, the two-staged rocket 1 will fly much farther by the propelling power of the first-stage rocket engine 11b. Therefore, the launch capability of the two-staged rocket 1 can be enhanced.

Note that the mounted computer 13c periodically and repeatedly predicts the predicted flight path of the two-staged rocket 1 and the predicted impact points of the first-stage rocket body 11 and the fairing 15, the predicted flight path and the predicted impact points being shown in FIG. 2. In such a way, even if a consumption pace of the fuel by the two-staged rocket 1 fluctuates during the flight due to a change of the weather condition, and the like, the predicted flight path and the predicted impact point, which are predicted by the mounted computer 13c, can be updated in response to such a fluctuation at any time.

Then, when the two-staged rocket 1 reaches the cut-off point of the first-stage rocket engine 11b (when the flight position of the two-staged rocket 1 coincides therewith), the mounted computer 13c cuts-off the first-stage rocket engine 11b, and thereafter, separates the first-stage rocket body 11 from the second-stage rocket 13.

Moreover, when the two-staged rocket 1 that has separated and discarded the first-stage rocket 11 therefrom reaches the separating/discarding point of the fairing 15 (with which the flight position of the two-staged rocket 1 coincides), the mounted computer 13c separates the fairing 15 from the second-stage rocket 13.

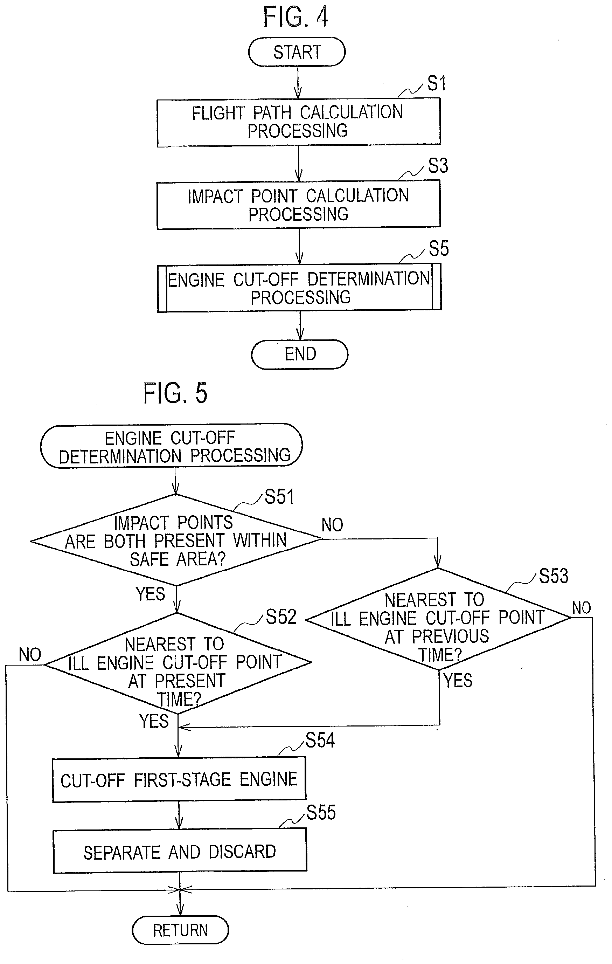

Next, referring to a flowchart of FIG. 4, a description is made of processing regarding the combustion cut-off of the first-stage rocket engine 11b, which is performed by the above-mentioned mounted computer 13c during the flight of the two-staged rocket 1.

In order to cut-off of the first-stage rocket engine 11b so that the first-stage rocket body 11 and the fairing 15 can drop to impact within the safe area SA, the mounted computer 13c of this embodiment executes flight path prediction processing (Step S1), impact point prediction processing (Step S3), and engine cut-off determination processing (Step S5), which are shown in FIG. 4, periodically and repeatedly during the flight of the two-staged rocket 1.

Then, in the flight path prediction processing of Step S1, the mounted computer 13c predicts the first-stage predicted flight path of the two-staged rocket 1 before separating and discarding the first-stage rocket body 11 and the second-stage predicted flight path of the two-staged rocket 1 after separating and discarding the first-stage rocket body 11.

Note that the mounted computer 13c predicts the first-stage predicted flight path based on the amount of the fuel remaining in the first-stage fuel tank 11a and based on the flight speed, the flight position and the flight attitude before the first-stage rocket engine 11b of the two-staged rocket 1 is cut-off, the flight speed, the flight position and the flight attitude being sensed by the IMU 13d.

Moreover, the mounted computer 13c predicts the second-stage predicted flight path based on the separating/discarding point of the first-stage rocket body 11, based on the amount of the fuel remaining in the second-stage fuel tank 13a, and based on the flight speed, the flight position and the flight attitude after the first-stage rocket engine 11b of the two-staged rocket 1 is cut-off, the flight speed, the flight position and the flight attitude being sensed by the IMU 13d.

Next, in the impact point prediction processing of Step S3, the mounted computer 13c predicts the impact points (predicted impact points) of the first-stage rocket body 11 and the fairing 15. Here, the mounted computer 13c predicts the impact points (predicted impact points) of the first-stage rocket body 11 and the fairing 15 based on the cut-off point of the first-stage rocket engine 11b, which is assumed on the predicted flight path of the first-stage rocket 11.

Subsequently, in the engine cut-off determination processing of Step S5, first, as shown in a flowchart of FIG. 5, the mounted computer 13c confirms whether there is a set, in which both of the impact points (predicted impact points) of the first-stage rocket body 11 and the fairing 15 are located within the safe area SA, among the sets of the impact points of the first-stage rocket 11 and the fairing 15, which are predicted in the impact point prediction processing of Step S3 in the present cycle (Step S51).

In a case where there is a set in which both of the drop points of the first-stage rocket body 11 and the fairing 15 are located within the safe area SA (YES in Step S51), the mounted computer 13c determines whether the two-staged rocket 1 has reached the cut-off point, which is farthest from the launching spot of the two-staged rocket 1 among the cut-off points of the first-stage rocket engine 11b, which correspond to the predicted impact points of the first-stage rocket body 11 and the fairing 15, the predicted impact points being predicted in Step S3 of FIG. 4 in the present cycle (Step S52).

In contrast, in a case where there is no set in which both of the drop impact points of the first-stage rocket 11 and the fairing 15 are located within the safe area SA (NO in Step S51), the mounted computer 13c determines whether the two-staged rocket 1 has reached the engine cut-off point, which is farthest from the launching spot of the two-staged rocket 1 among the cut-off points of the first-stage rocket engine 11b, which correspond to the predicted impact points of the first-stage rocket body 11 and the fairing 15, the predicted impact points being predicted in Step S3 of FIG. 4 in the previous cycle (Step S53).

Then, in the case of having determined that the two-staged rocket 1 has reached the farthest combustion cut-off point from the launching spot of the two-staged rocket 1 (YES in Step S52 or Step S53), then the mounted computer 13c cuts-off of the first-stage rocket engine 11b (Step S54), and separates and discards the first-stage rocket body 11 and the fairing 15 from the second-stage rocket 13 at the respective separating/discarding points individually corresponding to the cut-off point (Step S55), and ends the separation determination processing.

As obvious also from the above description, in this embodiment, Step S1 in the flowchart of FIG. 4 is processing corresponding to a flight path prediction-processor in the claims. Moreover, in this embodiment, Step S3 in FIG. 4 is processing corresponding to an impact point prediction processor in the claims. Furthermore, in this embodiment, Step S5 in FIG. 4 is processing corresponding to an engine cut-off controller in the claims.

As described above, in the two-staged rocket 1 of this embodiment, the flight path of the two-staged rocket 1 is periodically predicted during the flight, and the predicted impact points of the first-stage rocket body 11 and the fairing 15, which are separated and discarded from the second-stage rocket 13, in the case where the first-stage rocket engine 11 is cut-off at each scheduled passing point on the predicted flight path are predicted periodically.

Then, while the scheduled passing points in each of which both of the predicted impact points of the first-stage rocket body 11 and the fairing 15 are located within the safe area SA are present, the processing for defining the farthest scheduled passing point from the launching spot of the two-staged rocket 1 as the combustion cut-off point of the first-stage rocket engine 11b is periodically performed.

Therefore, the cut-off point of the first-stage rocket engine 11b is updated to the farthest scheduled passing point from the launching spot of the two-staged rocket 1 at any time. In such a way, the separating/discarding points of the first-stage rocket body 11 and the fairing 15 are also updated to the farthest points from the launching spot of the two-staged rocket 1 at any time.

Hence, while extending the flight distance by consuming the fuel in the fuel tanks 11a and 13a of the first-stage rocket 11 and the second-stage rocket 13 as much as possible to thereby enhance the launch capability of the two-staged rocket 1, the first-stage rocket body 11 and the fairing 15, which are separated and discarded from the second-stage rocket 13, can be dropped to impact within the safe area SA.

Next, a description is made of a control device according to a second embodiment of the present disclosure, which is mounted on the two-staged rocket 1.

Also in this embodiment, the mounted computer 13c periodically predicts the flight path of the two-staged rocket 1 during the flight, and periodically predicts the predicted impact points in the case where the first-stage rocket body 11 and the fairing 15 are separated and discarded from the second-stage rocket 13 at the respective scheduled passing points on the predicted flight path.

Then, in this embodiment, the mounted computer 13c estimates whether none of the predicted impact points of the first-stage rocket 11 and the fairing 15, which are predicted in a next period, comes to be located within the safe area SA of the topographic data. The mounted computer 13c performs this estimation based on a change of at least one of the predicted flight path of the two-staged rocket 1 and the predicted impact points of the first-stage rocket 11 and the fairing 15, the change being observed between two immediately previous cycles which continue with each other.

Specifically, for example, the mounted computer 13c adds variations obtained from the predicted impact points of the first-stage rocket body 11 and the fairing 15, which are predicted in the previous cycle, to the predicted impact points of the first-stage rocket body 11 and the fairing 15, which are predicted in the present cycle, and thereby estimates the predicted impact points of the first-stage rocket body 11 and the fairing 15, which are predicted in the nest cycle.

Then, the mounted computer 13c determines whether or not both of the predicted impact points of the first-stage rocket body 11 and the fairing 15 in the next cycle, the predicted impact points being thus estimated, are located within the safe area SA.

Alternatively, for example, the mounted computer 13c adds a variation obtained from the cut-off point of the first-stage rocket engine 11b, which is predicted in the previous cycle, to the cut-off point of the first-stage rocket engine 11b, which is predicted in the present cycle, and thereby estimates the cut-off point of the first-stage rocket engine 11b, which is predicted in the next cycle.

Then, from the estimated cut-off point of the first-stage rocket engine 11b in the next cycle, the mounted computer 13c individually calculates the separating/discarding point of the first-stage rocket body 11 and the separating/discarding point of the fairing 15. Moreover, the mounted computer 13c determines whether both of the predicted impact point of the first-stage rocket 11 and the predicted impact point of the fairing 15 in the case where the first-stage rocket 11 and the fairing 15 are individually separated and discarded from each separating/discarding point are located within the safe area SA.

If both of the predicted impact points of the first-stage rocket body 11 and the fairing 15 are located within the safe area SA, then there is obtained such an estimation result that the predicted impact points of the first-stage rocket body 11 and the fairing 15, which are predicted in the next cycle, are located within the safe area SA of the topographical data. Meanwhile, if both of the predicted impact points of the first-stage rocket body 11 and the fairing 15 are not located within the safe area SA, then there is obtained such an estimation result that the predicted impact points of the first-stage rocket 11 and the fairing 15, which are predicted in the next cycle, come not to be located within the safe area SA of the topographical data.

Then, in such a case of having estimated that none of the predicted impact points of the first-stage rocket body 11 and the fairing 15, which are predicted in the next cycle, comes to be located within the safe area SA of the topographical data, the mounted computer 13c decides the cut-off point of the first-stage rocket engine 11b.

Specifically, the mounted computer 13c extracts the sets of the combinations, in each of which both of the predicted impact point of the first-stage rocket body 11 and the predicted impact point of the fairing 15 are located within the safe area SA, among the sets of the predicted impact points of the first-stage rocket body 11 and the fairing 15, which are predicted in the present cycle. Then, the mounted computer 13c defines the farthest scheduled passing point from the launching spot of the two-staged rocket 1 among the scheduled passing points corresponding to the extracted sets as the cut-off point of the first-stage rocket engine 11b.

Then, when the two-staged rocket 1 reaches the cut-off point of the first-stage rocket engine 11b (when the flight position of the two-staged rocket 1 coincides therewith), the mounted computer 13c cuts-off the first-stage rocket engine 11b. Then, the mounted computer 13c separates the first-stage rocket 11 from the second-stage rocket 13 at the separation/discarding point corresponding to the engine cut-off point.

Moreover, when the two-staged rocket 1 that has separated and discarded the first-stage rocket body 11 therefrom reaches the separating/discarding point of the fairing 15 (with which the flight position of the two-staged rocket 1 coincides), the separating/discarding point corresponding to the engine cut-off point, the mounted computer 13c separates the fairing 15 from the second-stage rocket 13.

Therefore, also in this embodiment, in order to separate and discard the first-stage rocket body 11 and the fairing 15 so that the first-stage rocket 11 and the fairing 15 can drop to impact within the safe area SA, the mounted computer 13c of this embodiment performs the flight path prediction processing (Step S1), the impact point prediction processing (Step S3), and the engine cut-off determination processing (Step S5), which are shown in FIG. 4, periodically and repeatedly during the flight of the two-staged rocket 1.

Then, in the flight path prediction processing of Step S1 and the impact point prediction processing of Step S3, the mounted computer 13c performs similar processing to that of the first embodiment. Meanwhile, in the engine cut-off determination processing of Step S5, the mounted computer 13c performs different processing from that of the first embodiment.

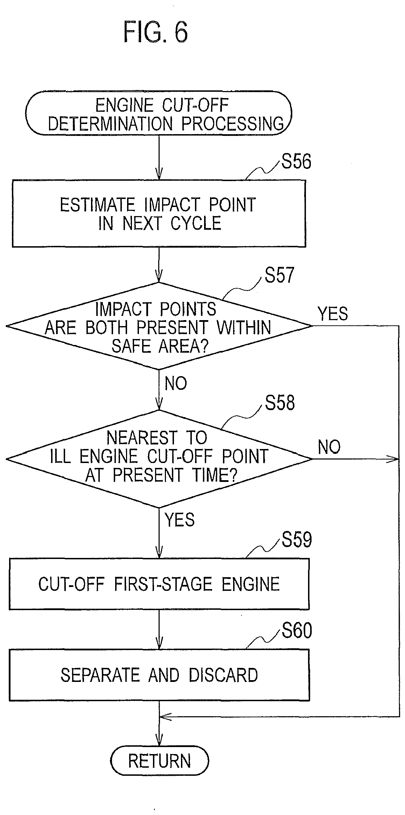

Specifically, first, as shown in a flowchart of FIG. 6, the mounted computer 13c estimates the predicted impact points of the first-stage rocket body 11 and the fairing 15, which are predicted in the next cycle (Step S56), and confirms whether there is a set in which both of the predicted impact points of the first-stage rocket body 11 and the fairing 15, which are thus estimated, are located within the safe area SA of the topographical data.

In a case where there is a set in which both of the predicted impact points of the first-stage rocket body 11 and the fairing 15, which are thus estimated, are located within the safe area SA of the topographical data (YES in Step S57), the mounted computer 13c ends the engine cut-off determination processing. In a case where there is no set in which both of the predicted impact points of the first-stage rocket body 11 and the fairing 15, which are thus estimated, are located within the safe area SA of the topographical data (NO in Step S57), the mounted computer 13c determines whether or not the two-staged rocket 1 has reached the engine cut-off point, which is farthest from the launching spot of the two-staged rocket 1 among the combustion cut-off points of the first-stage rocket engine 11b, which correspond to the predicted impact points of the first-stage rocket body 11, the predicted impact points being predicted in Step S3 of FIG. 4 in the present cycle (Step S58).

Then, in the case of having determined that the two-staged rocket 1 has reached the farthest combustion cut-off point from the launching spot of the two-staged rocket 1 (YES in Step S58), the mounted computer 13c cuts-off the first-stage rocket engine 11b (Step S59), separates and discards the first-stage rocket body 11 and the fairing 15 from the second-stage rocket 13 at the respective separating/discarding points individually corresponding to the cut-off point (Step S60), and ends the engine cut-off determination processing.

Also in the above-mentioned embodiment, Step S1 in the flowchart of FIG. 4 is the processing corresponding to the flight path prediction processor in the claims. Moreover, also in this embodiment, Step S3 in FIG. 4 is the processing corresponding to the impact point prediction processor in the claims. Furthermore, also in this embodiment, Step S5 in FIG. 4 is the processing corresponding to the engine cut-off controller in the claims.

Then, in the two-staged rocket 1 of this embodiment, the flight path of the two-staged rocket 1 is periodically predicted calculated during the flight, and the sets of the predicted impact points of the first-stage rocket body 11 and the fairing 15, which are separated and discarded from the second-stage rocket 13, in the case where the combustion of the first-stage rocket engine 11b is cut-off at each scheduled passing point on the predicted flight path are predicted periodically.

Moreover, from the changes of the predicted flight path and the predicted impact points between two continuous cycles, the predicted impact points of the first-stage rocket body 11 and the fairing 15, which are predicted in the next cycle, are individually estimated.

Then, while the set in which both of the predicted impact points of the first-stage rocket body 11 and the fairing 15, which are thus estimated, are located within the safe area SA is present, the cut-off point of the first-stage rocket engine 11b is not decided, but the processing for predicting the predicted flight path and the predicted impact points is also performed in the next cycle.

Therefore, until the set in which both of the predicted impact points of the first-stage rocket 11 and the fairing 15, which are thus estimated, are located within the safe area SA comes not to be present, the combustion cut-off point of the first-stage rocket engine 11b is updated to the farthest scheduled passing point from the launching spot of the two-staged rocket 1 at any time. In such a way, the separating/discarding points of the first-stage rocket body 11 and the fairing 15 are also updated to the farthest points from the launching spot of the two-staged rocket 1 at any time.

Hence, while extending the flight distance by consuming the fuel in the propellant tanks 11a and 13a of the first-stage rocket body 11 and the second-stage rocket 13 as much as possible to thereby enhance the launch capability of the two-staged rocket 1, the first-stage rocket body 11 and the fairing 15, which are separated and discarded from the second-stage rocket 13, can be dropped to impact within the safe area SA.

Note that, in the above-mentioned respective embodiments, the description has been made of the examples where the present disclosure is individually applied to the cases of separating and discarding the first-stage rocket body 11 and the fairing 15 from the second-stage rocket 13. Hence, in these embodiments, the first-stage rocket 11 and the fairing 15 correspond to a discarded object in the claims.

Moreover, the present disclosure is not limited to the above-mentioned respective embodiments, and is also applicable to an event of separating and discarding the fairing from the rocket no matter whether the rocket may be a single-staged one or a multi-staged one, and to a case of separating and discarding an n-th-stage rocket from an (n-1)-th-stage rocket in the multi-staged rocket. In the former case, the fairing corresponds to the discarded object in the claims, and in the latter case, the (n-1)-th-stage rocket corresponds to the discarded object in the claims. As a matter of course, as in the above-mentioned respective embodiments, the present disclosure can also be embodied in a form in which both of the fairing and the (n-1)-th-stage rocket body correspond to the discarded object in the claims.

Moreover, the present disclosure is also applicable to a single-staged rocket that does not include the fairing and drops as a discarded object by the cut-off of the engine. A description is made below of embodiments of such a case of applying the present disclosure to the rocket as described above.

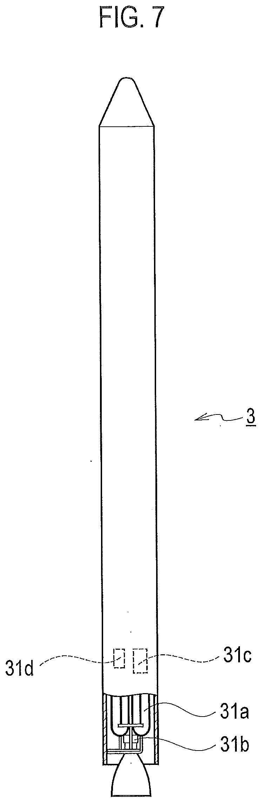

FIG. 7 is a partially cutaway front view showing a schematic configuration of a single-staged rocket on which control devices according to a third embodiment and fourth embodiment of the present disclosure are mounted. A single-staged rocket 3 of this embodiment, which is shown in FIG. 7, includes tanks 31a of liquid oxygen and liquid hydrogen and a rocket engine 31b that uses the liquid oxygen and the liquid hydrogen as propellants. Note that illustration of a solid rocket booster and an auxiliary engine, which are for use at a time of launching the single-staged rocket 3, is omitted.

When the rocket engine 31b is cut-off by fining use of the propellant (liquid oxygen and liquid hydrogen) of the tanks 31a, the single-staged rocket 3 drops and is discarded before long. Ignition and cut-off of the rocket engine 31b are controlled by a mounted computer (GCC: guidance control computer) 33c (corresponding to a control device for a rocket in the claims) of the single-staged rocket 3.

To the mounted computer 33c, an IMU 33d is connected, which senses a flight speed, flight position and flight attitude of the single-staged rocket 3 by using gyro and acceleration sensors. The mounted computer 33c controls a propelling direction and the like of the rocket engine 31b based on the flight speed, the flight position and the flight attitude, which are sensed by the IMU 33d, so that the single-staged rocket 3 can fly through a nominal flight path of which data is stored in an internal memory of the mounted computer 33c.

Moreover, the mounted computer 33c monitors an amount of the propellants remaining in the tanks 31a of the single-staged rocket 3, and predicts a flight path of the single-staged rocket 3 based on the monitored amount of propellants and on the flight speed, flight position and flight attitude of the single-staged rocket 3, which are sensed by the IMU 33d.

The flight path predicted by the mounted computer 33c (that is, a predicted flight path) includes a path along which the single-staged rocket 3 flies from now on by propelling power of the rocket engine 31b by using residual propellants of the-tanks 31a until the rocket engine 31b is cut-off.

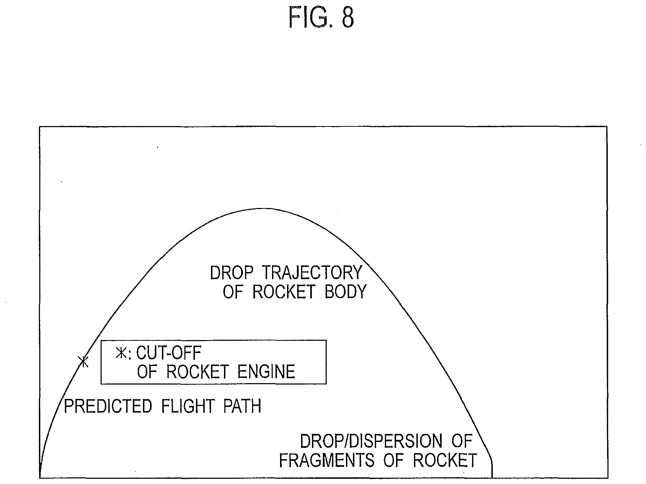

Note that, in a solid line in an explanatory view of FIG. 8, a segment from a launching point in which both of a ground surface distance and an altitude are "0" to a combustion cut-off point of the rocket engine 33b, which is indicated by a plot point as an asterisk in FIG. 8, is the predicted flight path of the single-staged rocket 3, which is predicted by the mounted computer 33c.

Then, the mounted computer 33c predicts a point where the single-staged rocket 3 is predicted to drop in a case where the rocket engine 31b of the single-staged rocket 3 is cut-off at an engine cut-off point on the predicted flight path, that is, predicts a predicted impact point (IIP). Note that the mounted computer 33c predicts the predicted impact point of the single-staged rocket 3 based on the flight speed, flight position and flight attitude of the single-staged rocket 3 on the predicted flight path.

Moreover, the predicted impact point of the single-staged rocket 3 is varied depending on to which point on the predicted flight path the cut-off point of the first-stage rocket engine 31b is to be decided. Accordingly, the mounted computer 33c sets a plurality of scheduled passing points on the predicted flight path, and individually predicts the predicted impact points of the single-staged rocket 3 for cases where the respective scheduled passing points are decided to be the cut-off point of the rocket engine 31b.

Incidentally, the predicted flight paths of the single-staged rocket 3, which is predicted by the mounted computer 33c, is a so-called nominal flight path. However, in an actual flight path of the single-staged rocket 3, dispersion for the nominal flight path occurs by an influence of a weather condition or the like. Then, this dispersion is not reflected on the predicted flight path of the single-staged rocket 3, which serves as a base in an event where the mounted computer 33c predicts the predicted impact points of the single-staged rocket 3.

Accordingly, in consideration of the dispersion of the actual flight path of the single-staged rocket 3 with respect to the nominal flight path, the mounted computer 33c predicts the predicted impact point of the single-stage rocket 3 as a range including some error.

Note that, in an internal memory of the mounted computer 33c, topographic data that defines a safe area where the drop of the single-staged rocket 3 is allowed is stored together with data of the nominal flight path of the single-staged rocket 3. The stored topographical data is substantially like that shown in the explanatory view of FIG. 3.

Moreover, in the internal memory of the mounted computer 33c, data indicating an impact area of fragments dropped from single-staged rocket 3 is stored. A difference in size and shape of this fragment impact area effects on a launch capability of the single-stage rocket 3.

This is because, as the single-staged rocket 3 has a higher launch capability, inertia in a flying direction, which acts on the single-staged rocket 3 at the cut-off time of the rocket engine 31b, is larger, and a dispersion degree of the fragments of the dropped single-staged rocket 3, the dispersion being caused by force other than the inertia, is smaller.

Then, the mounted computer 33c collates such predicted impact points of the single-staged rocket 3 (which include the fragment impact area) with the topographic data, and extracts the predicted impact point of the single-staged rocket 3, which is located within the safe area SA. Moreover, the mounted computer 33c defines a scheduled passing point, which corresponds to the extracted predicted impact point and is assumed to be the cut-off point of the rocket engine 31b on the predicted flight path of the single-staged rocket 3, as an official cut-off point of the rocket engine 31b.

At this time, in a case where there are a plurality of the predicted impact points of the single-staged rocket 3, which include the fragment impact area and are located within the safe area SA, the mounted computer 33c defines a scheduled passing point, which is farthest from the launching spot of the single-staged rocket 3 among a plurality of such scheduled passing points, as the official cut-off point of the rocket engine 31b.

In such a way, until the rocket engine 31b of the single-staged rocket 3 is cut-off, the single-stage rocket 3 will fly much farther by the propelling power of the rocket engine 31b. Therefore, the launch capability of the single-staged rocket 3 can be enhanced.

Note that the mounted computer 33c periodically and repeatedly predicts the predicted flight path and predicted impact point of the single-staged rocket 3 the predicted flight path and the predicted impact point being shown in FIG. 8. In such a way, even if a consumption pace of the fuel by the single-staged rocket 3 fluctuates during the flight due to a change of the weather condition, and the like, the predicted flight path and the predicted impact point, which are predicted by the mounted computer 33c, can be updated in response to such a fluctuation at any time.

Then, when the single-staged rocket 3 reaches the cut-off point of the rocket engine 31b (when the flight position of the single-staged rocket 3 coincides therewith), the mounted computer 33c cuts-off the rocket engine 31b.

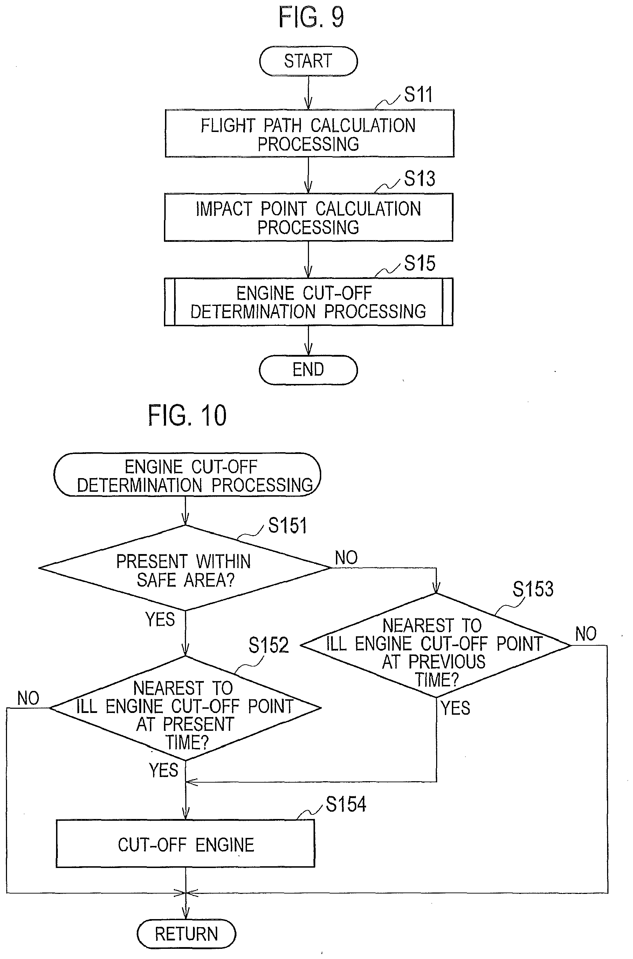

Next, referring to a flowchart of FIG. 9, a description is made of processing regarding the cut-off of the rocket engine 31b, which is performed by the above-mentioned mounted computer 33c during the flight of the single-staged rocket 3.

In order to cut-off the combustion of the rocket engine 31b so that the single-staged rocket 3 can drop to impact within the safe area SA, the mounted computer 33c of this embodiment performs flight path prediction processing (Step S11), impact point prediction processing (Step S13), and engine cut-off determination processing (Step S15), which are shown in FIG. 9, periodically and repeatedly during the flight of the single-staged rocket 3.

Then, in the flight path prediction processing of Step S11, the mounted computer 33c predicts the predicted flight path of the single-staged rocket 3 before the rocket engine 31b is cut-off.

Note that the mounted computer 33c predicts the predicted flight path of the single-staged rocket 3 based on the amount of the propellants remaining in the tanks 31a and based on the flight speed, flight position and flight attitude of the single-staged rocket 3 before the rocket engine 31b is cut-off, the flight speed, the flight position and the flight attitude being sensed by the IMU 33d.

Next, in the impact point prediction processing of Step S13, the mounted computer 33c predicts the impact point (predicted impact point) of the single-staged rocket 3. Here, the mounted computer 33c predicts the impact point (predicted impact point) of the single-staged rocket 3 based on the cut-off point of the rocket engine 31b, which is assumed on the predicted flight path of the single-stage rocket 3.

Subsequently, in the engine cut-off determination processing of Step S15, as shown in a flowchart of FIG. 10, the mounted computer 33c confirms whether there is an impact point, which is located within the safe area SA, among such impact points (predicted impact points) of the single-staged rocket 3, which are predicted in the impact point prediction processing of Step S13 in the present cycle (Step S151).

In a case where there is an impact point of the single-staged rocket 3, which is located within the safe area SA (YES in Step S151), the mounted computer 33c determines whether or not the single-stage rocket 3 has reached the engine cut-off point, which is farthest from the launching spot of the single-staged rocket 3 among the cut-off points of the rocket engine 31b, which correspond to the predicted drop point of the single-staged rocket 3, the predicted drop points being predicted in Step S13 of FIG. 9 in the present cycle (Step S152).

In contrast, in a case where there is no impact point of the single-stage rocket 3, which is located within the safe area SA (NO in Step S151), the mounted computer 33c determines whether or not the single-staged rocket 3 has reached the cut-off point, which is farthest from the launching spot of the single-staged rocket 3 among the cut-off points of the rocket engine 31b, which correspond to the predicted drop point of the single-staged rocket 3, the predicted drop points being predicted in Step S13 of FIG. 9 in the previous cycle (Step S153).

Then, in the case of having determined that the single-staged rocket 3 has reached the farthest combustion cut-off point from the launching spot of the single-staged rocket 3 (YES in Step S152 or Step S153), then the mounted computer 33c cuts-off the rocket engine 31b (Step S154), and ends the engine cut-off processing.

As obvious also from the above description, in this embodiment, Step S11 in the flowchart of FIG. 9 is such processing corresponding to the flight path prediction processor in the claims. Moreover, in this embodiment, Step S13 in FIG. 9 is processing corresponding to the impact point prediction processor in the claims. Furthermore, in this embodiment, Step S15 in FIG. 9 is processing corresponding to the engine cut-off controller in the claims.

As described above, in the single-staged rocket 3 of this embodiment, the flight path of the single-staged rocket 3 is periodically predicted during the flight, and the predicted impact point of the single-staged rocket 3 in the case where the rocket engine 31b is cut-off at each scheduled passing point on the predicted flight path is predicted periodically.

Then, while the scheduled passing point in which the predicted impact point of the single-staged rocket 3 is located within the safe area SA is present, the processing for defining the farthest scheduled passing point from the launching spot of the single-staged rocket 3 as the combustion cut-off point of the rocket engine 31b is periodically performed.

Therefore, the engine cut-off point of the rocket engine 31b is updated to the farthest scheduled passing point from the launching spot of the single-staged rocket 3 at any time. Hence, while extending the flight distance by consuming the propellants in the tanks 31a as much as possible to thereby enhance the launch capability of the single-staged rocket 3, the single-staged rocket 3 can be dropped to impact within the safe area SA.

Next, a description is made of a control device according to a fourth embodiment of the present disclosure, which is mounted on the single-staged rocket 3.

Also in this embodiment, the mounted computer 33c predicts the flight path of the single-staged rocket 3 periodically during the flight, and periodically predicts the predicted impact point of the single-staged rocket 3 in the case where the rocket engine 31b is cut-off at each scheduled passing point on the predicted flight path.

Then, in this embodiment, the mounted computer 33c estimates whether or not none of such predicted impact points of the single-staged rocket 3, which are predicted in a next period, comes to be located within the safe area SA of the topographic data. The mounted computer 33c performs this estimation based on a change of at least one of the predicted flight path of the single-staged rocket 3 and the predicted impact point of the single-staged rocket 3, the change being observed between two immediately previous cycles which continue with each other.

Specifically, for example, the mounted computer 33c adds a variation obtained from the predicted impact point of the single-staged rocket 3, which is predicted in the previous cycle, to the predicted impact point of the single-staged rocket 3, which is predicted in the present cycle, and thereby estimates the predicted impact point of the single-staged rocket 3, which is predicted in the nest cycle. Then, the mounted computer 33c determines whether the predicted impact point of the single-staged rocket 3 in the next cycle, the predicted impact point being thus estimated, is located within the safe area SA.

Alternatively, for example, the mounted computer 33c adds a variation obtained from the cut-off point of the rocket engine 31b, which is predicted in the previous cycle, to the cut-off point of the rocket engine 31b, which is predicted in the present cycle, and thereby estimates the cut-off point of the rocket engine 31b, which is predicted in the next cycle.

Then, the mounted computer 33c determines whether the predicted impact point of the single-staged rocket 3 in the next cycle, the predicted impact point being thus estimated, is located within the safe area SA.

If the predicted impact point of the single-staged rocket 3 is located within the safe area SA, then there is obtained such an estimation result that the predicted impact point of the single-staged rocket 3, which is predicted in the next cycle, is located within the safe area SA of the topographical data. Meanwhile, if the predicted impact point of the single-staged rocket 3 is not located within the safe area SA, then there is obtained such an estimation result that the predicted impact point of the single-staged rocket 3, which is predicted in the next cycle, comes not to be located within the safe area SA of the topographical data.

Then, in such a case of having estimated that none of such predicted impact points of the single-staged rocket 3, which are predicted in the next cycle, comes to be located within the safe area SA of the topographical data, the mounted computer 33c decides the cut-off point of the rocket engine 31b.

Specifically, the mounted computer 33c extracts the predicted impact point of the single-staged rocket 3, which is located within the safe area SA, among such predicted impact points of the single-staged rocket 3, which are predicted in the present cycle. Then, the mounted computer 33c defines the farthest scheduled passing point from the launching spot of the single-staged rocket 3 among the scheduled passing points corresponding to the predicted impact point, which is thus extracted, as the cut-off point of the rocket engine 31b.

Then, when the single-staged rocket 3 reaches the cut-off point of the rocket engine 31b (when the flight position of the single-staged rocket 3 coincides therewith), the mounted computer 33c cuts-off the rocket engine 31b.

Therefore, also in this embodiment, in order to cuts-off the rocket engine 31b so that the single-staged rocket 3 can drop to impact within the safe area SA, the mounted computer 33c performs the flight path prediction processing (Step S11), the impact point prediction processing (Step S13), and the engine cut-off determination processing (Step S15), which are shown in FIG. 9, periodically and repeatedly during the flight of the single-staged rocket 3.

Then, in the flight path prediction processing of Step S11 and the impact point prediction processing of Step S13, the mounted computer 33c performs similar processing to that of the third embodiment. Meanwhile, in the engine cut-off determination processing of Step S15, the mounted computer 33c performs different processing from that of the third embodiment.

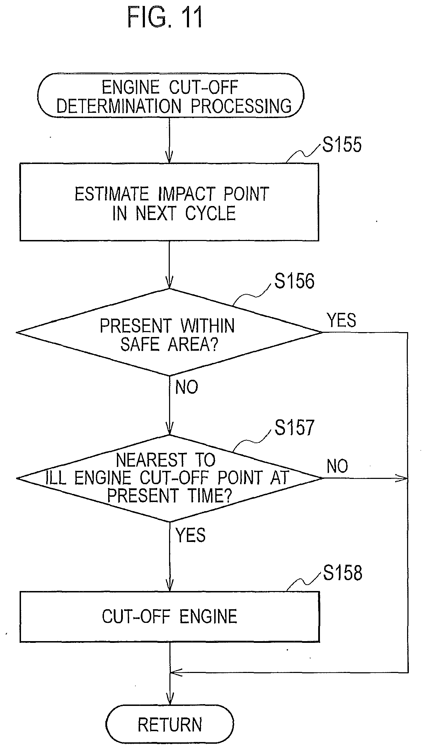

Specifically, first, as shown in a flowchart of FIG. 11, the mounted computer 33c estimates the predicted impact points of the single-staged rocket 3, which are predicted in the next cycle (Step S155), and confirms whether there is a predicted impact point of the single-staged rocket 3, which is located within the safe area SA of the topographical data, among the predicted impact points of the single-staged rocket 3, which are thus estimated (Step S156).

In a case where there is a predicted impact point, which is located within the safe area SA of the topographic data, among the predicted impact points of the single-staged rocket 3, which are thus estimated (YES in Step S156), the mounted computer 33c ends the engine cut-off determination processing. In a case where there is no predicted impact point located within the safe area SA of the topographic data (NO in Step S156), the mounted computer 33c determines whether or not the single-staged rocket 3 has reaches the farthest combustion cut-off point the single-stages rocket 3 among the cut-off points of the rocket engine 31b, which correspond to the predicted impact points of the single-staged rocket 3, the predicted impact points being predicted in Step S13 of FIG. 9 in the present cycle (Step S157).

Then, in the case of having determined that the single-staged rocket 3 has reached the farthest combustion cut-off point from the launching spot of the single-staged rocket 3 (YES in Step S15), then the mounted computer 33c cuts-off the rocket engine 31b (Step S158), and ends the engine cut-off determination processing.

Also in the above-mentioned embodiment, Step S11 in the flowchart of FIG. 9 is such processing corresponding to the flight path prediction processor in the claims. Moreover, also in this embodiment, Step S13 in FIG. 9 is processing corresponding to the impact point prediction processor in the claims. Furthermore, also in this embodiment, Step S15 in FIG. 9 is processing corresponding to the engine cut-off controller in the claims.

Then, in the single-staged rocket 3 of this embodiment, the flight path of the single-staged rocket 3 is periodically predicted during the flight, and the predicted impact point of the single-staged rocket 3 in the case where the rocket engine 31b is cut-off at each scheduled passing point on the predicted flight path is predicted periodically.

Moreover, from the changes of the predicted flight path and the predicted impact point between two continuous cycles, the predicted impact points of the single-staged rocket 3, which are predicted in the next cycle, are individually estimated.

Then, while the predicted impact point located within the safe area SA is present among the predicted impact points of the single-staged rocket 3, which are thus estimated, the cut-off point of the rocket engine 31b is not decided, but the processing for predicting the predicted flight path and the predicted impact point is also performed in the next cycle.

Therefore, until the predicted impact point located within the safe area SA comes not to be present among the predicted impact points of the single-staged rocket 3, which are thus estimated, the cut-off point of the rocket engine 31b is updated to the farthest scheduled passing point from the launching spot of the single-staged rocket 3 at any time.

Hence, while extending the flight distance by consuming the propellants in the tanks 31a of the single-staged rocket 3 as much as possible to thereby enhance the launch capability of the single-staged rocket 3, the single-staged rocket 3 can be dropped to impact within the safe area SA.

### DESCRIPTION OF REFERENCE NUMERALS

- 1: TWO-STAGED ROCKET
- 3: SINGLE-STAGED ROCKET
- 11: FIRST-STAGE ROCKET
- 11a, 13a, 31a: PROPELLANT TANK
- 11b, 13b, 31b: ROCKET ENGINE
- 13: SECOND-STAGE ROCKET
- 13c, 33c: MOUNTED COMPUTER
- 13d, 33d: IMU
- 15: FAIRING
- SA: SAFE AREA

## Claims

1. A control device for a rocket (1, 3), cutting-off a rocket engine (11b, 13b, 31b) during flight of the rocket (1, 3) and discarding a discarded object, the control device comprising:
a flight path predicting processor configured to periodically predict a flight path, wherein the flight path predicting processor is configured to predict a first cycle, which was predicted in the past time of the predicted flight paths, a second cycle, which is predicted in the present time of predicted flight paths, and a third cycle, which is predicted in the next time of the predicted flight paths, wherein the rocket (1, 3) flies therealong from now on by residual fuel, based on a flight speed, a flight position and flight attitude of the rocket (1, 3);
an impact point predicting processor configured to periodically predict impact points of the discarded object in a case of cutting-off the rocket engine (11b, 13b, 31b) at respective scheduled passing points on the predicted flight path of the rocket (1, 3); and
an engine cut-off controller configured to cut-off the rocket engine (11b, 13b, 31b) and discard the discarded object in a case where the flight position of the rocket (1, 3) coincides with a scheduled passing point farthest from a launching spot of the rocket (1, 3), the scheduled passing point also being where the discarded object discarded at a scheduled passing point is expected to impact within a safe area (SA) on predetermined topographic data, the scheduled passing point being among respective scheduled passing points on the predicted flight path predicted in the first cycle.

2. A control device for a rocket (1, 3), cutting-off a rocket engine (11b, 13b, 31b) during flight of the rocket (1) and discarding a discarded object, the control device comprising:
a flight path predicting processor configured to periodically predict a flight path, wherein the flight path predicting processor is configured to predict a first cycle, which was predicted in the past time of the predicted flight paths, a second cycle, which is predicted in the present time of predicted flight paths, and a third cycle, which is predicted in the next time of the predicted flight paths, wherein the rocket (1, 3) flies therealong from now on by residual fuel, based on a flight speed, a flight position and flight attitude of the rocket (1, 3);
an impact point predicting processor configured to periodically predict impact points of the discarded object in a case of cutting-off the rocket engine (11b, 13b, 31b) at respective scheduled passing points on the predicted flight path of the rocket (1, 3); and
an engine cut-off controller, in a case where it is estimated that none of the predicted impact points of the discarded object, predicted for respective scheduled passing points on a predicted flight path predicted in the third cycle from a change of at least one of the predicted flight path of the rocket (1, 3), predicted by adding variations obtained from the predicted impact point of the discarded object, which is predicted in the first cycle, to the predicted impact point of the discarded object, which is predicted in the second cycle, and thereby estimates the predicted impact point which is predicted in the third cycle, comes to be located within a safe area (SA) on predetermined topographic data, configured to cut-off the rocket engine (11b, 13b, 31b) and discard the discarded object at a farthest scheduled passing point from a launching spot of the rocket (1, 3), the scheduled passing point being where a predicted impact point of the discarded object is located within the safe area (SA) on the topographic data, the scheduled passing point being among respective scheduled passing points on the predicted flight path predicted at a present time in the second cycle, and the predicted impact point being predicted to correspond to each of the scheduled passing points.

3. The control device for a rocket (1, 3) according to either one of claims 1 and 2, wherein the rocket (1, 3) is a multi-staged rocket (1), the discarded object includes at least an (n-1)-th-stage rocket separated and discarded from an n-th-stage rocket, the flight path predicting processor configured to periodically predict a predicted flight path, the multi-staged rocket (1) flies therealong from now on by propelling power generated by an (n-1)-th-stage rocket engine (11b, 13b, 31b) by using residual fuel, based on a flight speed, a flight position and flight attitude of the multi-staged rocket (1), and for respective scheduled passing points on the predicted flight path of the multi-staged rocket (1), the drop point predicting processor configured to periodically predict predicted impact points of the (n-1)-th-stage rocket in a case where the (n-1)-th-stage rocket engine (11b, 13b, 31b) is cut-off and the (n-1)-th-stage rocket is separated and discarded from the n-th-stage rocket.

## Patentansprüche

1. Steuerungsvorrichtung für eine Rakete (1, 3), die ein Raketentriebwerk (11b, 13b, 31b) während des Flugs der Rakete (1, 3) abschaltet und ein Abwurfobjekt abwirft, wobei die Steuerungsvorrichtung Folgendes umfasst:
einen Prozessor zum Vorhersagen einer Flugbahn, der konfiguriert ist, um eine Flugbahn periodisch vorherzusagen, wobei der Prozessor zum Vorhersagen einer Flugbahn konfiguriert ist, um einen ersten Zyklus, der in der Vergangenheit der vorhergesagten Flugbahnen vorhergesagt wurde, einen zweiten Zyklus, der in der Gegenwart der vorhergesagten Flugbahnen vorhergesagt wird, und einen dritten Zyklus, der in der Zukunft der vorhergesagten Flugbahnen vorhergesagt werden wird, vorherzusagen, wobei die Rakete (1, 3) von nun an darauf mit Resttreibstoff fliegt, basierend auf einer Fluggeschwindigkeit, einer Flugposition und einer Fluglage der Rakete (1, 3);
einen Prozessor zum Vorhersagen eines Einschlagpunktes, der konfiguriert ist, um Einschlagpunkte des Abwurfobjekts periodisch vorherzusagen, falls das Raketentriebwerk (11b, 13b, 31b) an jeweiligen geplanten Durchgangspunkten auf der vorhergesagten Flugbahn der Rakete (1, 3) abgeschaltet wird; und
einen Triebwerkabschalt-Controller, der konfiguriert ist, um das Raketentriebwerk (11b, 13b, 31b) abzuschalten und das Abwurfobjekt abzuwerfen, falls die Flugposition der Rakete (1, 3) mit einem geplanten Durchgangspunkt zusammenfällt, der von einem Abschussort der Rakete (1, 3) am weitesten entfernt ist, wobei sich der geplante Durchgangspunkt auch dort befindet, wo das Abwurfobjekt, das an einem geplanten Durchgangspunkt abgeworfen wird, innerhalb eines sicheren Bereichs (SA) an vorbestimmten topografischen Daten einschlagen soll, wobei sich der geplante Durchgangspunkt unter jeweiligen geplanten Durchgangspunkten auf der vorhergesagten Flugbahn befindet, die in dem ersten Zyklus vorhergesagt werden.

2. Steuerungsvorrichtung für eine Rakete (1, 3), die ein Raketentriebwerk (11b, 13b, 31b) während des Flugs der Rakete (1, 3) abschaltet und ein Abwurfobjekt abwirft, wobei die Steuerungsvorrichtung Folgendes umfasst:
einen Prozessor zum Vorhersagen einer Flugbahn, der konfiguriert ist, um eine Flugbahn periodisch vorherzusagen, wobei der Prozessor zum Vorhersagen einer Flugbahn konfiguriert ist, um einen ersten Zyklus, der in der Vergangenheit der vorhergesagten Flugbahnen vorhergesagt wurde, einen zweiten Zyklus, der in der Gegenwart der vorhergesagten Flugbahnen vorhergesagt wird, und einen dritten Zyklus, der in der Zukunft der vorhergesagten Flugbahnen vorhergesagt werden wird, vorherzusagen, wobei die Rakete (1) von nun an darauf mit Resttreibstoff fliegt, basierend auf einer Fluggeschwindigkeit, einer Flugposition und einer Fluglage der Rakete (1, 3);
einen Prozessor zum Vorhersagen eines Einschlagpunktes, der konfiguriert ist, um Einschlagpunkte des Abwurfobjekts periodisch vorherzusagen, falls das Raketentriebwerk (11b, 13b, 31b) an jeweiligen geplanten Durchgangspunkten auf der vorhergesagten Flugbahn der Rakete (1, 3) abgeschaltet wird; und
einen Triebwerkabschalt-Controller, der, falls geschätzt wird, dass keiner der vorhergesagten Einschlagpunkte des Abwurfobjekts, die für jeweilige geplante Durchgangspunkte auf einer vorhergesagten Flugbahn vorhergesagt werden, die in dem dritten Zyklus aus einer Änderung von mindestens einer der vorhergesagten Flugbahnen der Rakete (1, 3) vorhergesagt wird, die durch das Hinzufügen von Variationen vorhergesagt werden, die von dem vorhergesagten Einschlagpunkt des Abwurfobjekts, der in dem ersten Zyklus vorhergesagt wird, zu dem vorhergesagten Einschlagpunkt des Abwurfobjekts, der in dem zweiten Zyklus vorhergesagt wird, erzielt werden, und dadurch der vorhergesagte Einschlagpunkt geschätzt wird, der in dem dritten Zyklus vorhergesagt wird, innerhalb eines sicheren Bereichs (SA) an vorbestimmten topografischen Daten zu liegen kommt, konfiguriert ist, um das Raketentriebwerk (11b, 13b, 31b) abzuschalten und das Abwurfobjekt an einem Durchgangspunkt, der von einem Abschusspunkt der Rakete (1, 3) am weitesten entfernt ist, abzuwerfen, wobei sich der geplante Durchgangspunkt dort befindet, wo sich ein vorhergesagter Einschlagpunkt des Abwurfobjekts innerhalb des sicheren Bereichs (SA) an den topografischen Daten befindet, wobei sich der geplante Durchgangspunkt unter jeweiligen geplanten Durchgangspunkten auf der vorhergesagten Flugbahn befindet, die zum jetzigen Zeitpunkt in dem zweiten Zyklus vorhergesagt wird, und wobei der vorhergesagte Einschlagpunkt vorhergesagt wird, um jedem der geplanten Durchgangspunkte zu entsprechen.

3. Steuerungsvorrichtung für eine Rakete (1, 3), nach einem der Ansprüche 1 und 2, wobei die Rakete (1, 3) eine Mehrstufenrakete (1) ist, das Abwurfobjekt mindestens eine Rakete der (n-1). Stufe umfasst, die sich von einer Rakete der n. Stufe trennt und abgeworfen wird, der Prozessor zum Vorhersagen einer Flugbahn konfiguriert ist, um eine vorhergesagte Flugbahn periodisch vorherzusagen, die Mehrstufenrakete (1) von nun an darauf durch Triebkraft, die durch ein Raketentriebwerk (11b, 13b, 31b) der (n-1). Stufe erzeugt wird, unter Verwendung von Resttreibstoff fliegt, basierend auf einer Fluggeschwindigkeit, einer Flugposition und einer Fluglage der Mehrstufenrakete (1), und für jeweilige geplante Durchgangspunkte auf der vorhergesagten Flugbahn der Mehrstufenrakete (1) der Prozessor zum Vorhersagen einer Abwurfstelle konfiguriert ist, um Einschlagpunkte der Rakete der (n-1). Stufe periodisch vorherzusagen, falls das Raketentriebwerk (11b, 13b, 31b) der (n-1). Stufe von der Rakete der n. Stufe getrennt und abgeworfen wird.

## Revendications

1. Dispositif de commande pour une fusée (1, 3), arrêtant un moteur de fusée (11b, 13b, 31b) pendant le vol de la fusée (1, 3) et larguant un objet largué, le dispositif de commande comprenant :
un processeur de prédiction de trajectoire de vol configuré pour prédire périodiquement une trajectoire de vol, le processeur de prédiction de trajectoire de vol étant configuré pour prédire un premier cycle, qui était prédit dans le passé des trajectoires de vol prédites, un deuxième cycle, qui est prédit dans le présent des trajectoires de vol prédites, et un troisième cycle, qui est prédit dans le futur des trajectoires de vol prédites, la fusée (1, 3) volant désormais le long de celles-ci par combustible résiduel, sur la base d'une vitesse de vol, d'une position de vol et d'une attitude de vol de la fusée (1, 3) ;
un processeur de prédiction de point d'impact configuré pour prédire périodiquement des points d'impact de l'objet largué dans le cas d'un arrêt du moteur de fusée (11b, 13b, 31b) à des points de passage programmés respectifs sur la trajectoire de vol prédite de la fusée (1, 3) ; et
une unité de commande d'arrêt de moteur configurée pour arrêter le moteur de fusée (11b, 13b, 31b) et larguer l'objet largué dans un cas où la position de vol de la fusée (1, 3) coïncide avec le point de passage programmé le plus éloigné d'un lieu de lancement de la fusée (1, 3), le point de passage programmé étant également l'endroit où l'objet largué, largué à un point de passage programmé, est supposé s'écraser dans une zone sûre (SA) sur la base de données topographiques prédéterminées, le point de passage programmé étant parmi des points de passage programmés respectifs sur la trajectoire de vol prédite, prédite dans le premier cycle.

2. Dispositif de commande pour une fusée (1, 3), arrêtant un moteur de fusée (11b, 13b, 31b) pendant le vol de la fusée (1) et larguant un objet largué, le dispositif de commande comprenant :
un processeur de prédiction de trajectoire de vol configuré pour prédire périodiquement une trajectoire de vol, le processeur de prédiction de trajectoire de vol étant configuré pour prédire un premier cycle, qui était prédit dans le passé des trajectoires de vol prédites, un deuxième cycle, qui est prédit dans le présent des trajectoires de vol prédites, et un troisième cycle, qui est prédit dans le futur des trajectoires de vol prédites, la fusée (1, 3) volant désormais le long de celles-ci par combustible résiduel, sur la base d'une vitesse de vol, d'une position de vol et d'une attitude de vol de la fusée (1, 3) ;
un processeur de prédiction de point d'impact configuré pour prédire périodiquement des points d'impact de l'objet largué dans le cas d'un arrêt du moteur de fusée (11b, 13b, 31b) à des points de passage programmés respectifs sur la trajectoire de vol prédite de la fusée (1, 3) ; et
une unité de commande d'arrêt de moteur, dans le cas où il est estimé qu'aucun des points d'impact prédits de l'objet largué, prédits pour des points de passage programmés respectifs sur une trajectoire de vol prédite, prédite dans le troisième cycle, à partir d'un changement d'au moins une parmi la trajectoire de vol prédite de la fusée (1, 3), prédite par ajout de variations obtenues à partir du point d'impact prédit de l'objet largué, qui est prédit dans le premier cycle, au point d'impact prédit de l'objet largué, qui est prédit dans le deuxième cycle et qui, par conséquent, estime le point d'impact prédit qui est prédit dans le troisième cycle, n'est situé dans une zone sûre (SA) sur la base de données topographiques prédéterminées, configurée pour arrêter le moteur de fusée (11b, 13b, 31b) et larguer l'objet largué à un point de passage programmé le plus éloigné d'un lieu de lancement de la fusée (1, 3), le point de passage programmé étant l'endroit où un point d'impact prédit de l'objet largué se situe dans la zone sûre (SA) sur la base des données topographiques, le point de passage programmé étant parmi des points de passage programmés respectifs sur la trajectoire de vol prédite à un moment présent dans le deuxième cycle, et le point d'impact prédit étant prédit pour correspondre à chacun des points de passage programmés.

3. Dispositif de commande pour une fusée (1, 3) selon l'une des revendications 1 et 2, la fusée (1, 3) étant une fusée à étages multiples (1), l'objet largué comprenant au moins une fusée de (n-1)^{ième} étage séparée et larguée d'une fusée de n^{ième} étage, le processeur de prédiction de trajectoire de vol étant configuré pour prédire périodiquement une trajectoire de vol prédite, la fusée à étages multiples (1) volant désormais le long de celles-ci par propulsion d'énergie générée par un moteur de fusée de (n-1)^{ième} étage (11b, 13b, 31b) à l'aide de combustible résiduel, sur la base d'une vitesse de vol, d'une position de vol et d'une attitude de vol de la fusée à étages multiples (1), et pour des points de passage programmés respectifs sur la trajectoire de vol prédite de la fusée à étages multiples (1), le processeur de prédiction de point de chute étant configuré pour prédire périodiquement des points d'impact prédits de la fusée de (n-1)^{ième} étage dans le cas où le moteur de fusée de (n-1)^{ième} étage (11b, 13b, 31b) est arrêté et la fusée de (n-1)^{ième} étage est séparée et larguée de la fusée de ni^{ème} étage.
